(19) **Europäisches Patentamt**
**European Patent Office**
**Office européen des brevets**

(11) **EP 2 491 424 B1**

(12) **FASCICULE DE BREVET EUROPEEN**

(45) Date de publication et mention
de la délivrance du brevet:
**02.04.2014 Bulletin 2014/14**

(21) Numéro de dépôt: **10773888.2**

(22) Date de dépôt: **25.10.2010**

(51) Int Cl.:
***G01S 15/89*** *(2006.01)*

(86) Numéro de dépôt international:
**PCT/EP2010/066075**

(87) Numéro de publication internationale:
**WO 2011/048224 (28.04.2011 Gazette 2011/17)**

(54) **PROCEDE DE LOCALISATION ET DE CARTOGRAPHIE SIMULTANEES PAR FILTRAGE NON LINEAIRE ELASTIQUE**

VERFAHREN ZUR SIMULTANEN ORTUNG UND KARTIERUNG ÜBER ELASTISCHE NICHTLINEARE FILTERUNG

METHOD FOR SIMULTANEOUSLY LOCATING AND MAPPING VIA RESILIENT NON-LINEAR FILTERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.10.2009 FR 0905114**

(43) Date de publication de la demande:
**29.08.2012 Bulletin 2012/35**

(73) Titulaire: **Thales**
**92200 Neuilly Sur Seine (FR)**

(72) Inventeur: **FERRAND, Julien**
**F-29280 Plouzane (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-03/065073     WO-A1-2008/152618**

- **REED S ET AL: "Automated approach to classification of mine-like objects in sidescan sonar using highlight and shadow information", IEE PROCEEDINGS: RADAR, SONAR & NAVIGATION, INSTITUTION OF ELECTRICAL ENGINEERS, GB LNKD- DOI:10.1049/IP-RSN: 20040117, vol. 151, no. 1, 14 février 2004 (2004-02-14), pages 48-56, XP006021278, ISSN: 1350-2395**
- **GROEN J ET AL: "Shadow Enhancement in Synthetic Aperture Sonar Using Fixed Focusing", IEEE JOURNAL OF OCEANIC ENGINEERING, IEEE SERVICE CENTER, PISCATAWAY, NJ, US LNKD- DOI:10.1109/JOE.2008.920996, vol. 34, no. 3, 1 juillet 2009 (2009-07-01), pages 269-284, XP011266897, ISSN: 0364-9059**

EP 2 491 424 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention intéresse la détection et localisation d'objets et la cartographie de zones, au moyen d'un dispositif de détection. Elle intéresse plus particulièrement le domaine des sonars de détection et de la cartographie de fonds marins.

Réaliser la cartographie d'une zone de terrain consiste principalement à relever la position géographique des éléments remarquables localisés sur la zone considérée, des éléments de relief ou des objets fixes en particulier. Cette cartographie est généralement réalisée au moyen de systèmes de détection montés sur un véhicule approprié, le véhicule parcourant le sol de la zone considérée, ou survolant cette zone selon les cas. En pratique, le système de détection détermine la position relative des éléments remarquables par rapport au véhicule et la position absolue de chaque élément est déterminée en associant la position relative mesurée et la position du véhicule à l'instant de détection, supposée connue, qui est par exemple déterminée par le système de navigation du véhicule.

Ainsi par exemple la cartographie d'une zone de terrain émergée peut être réalisée en utilisant un système radar ayant la résolution suffisante, ce radar étant monté sur un aéronef, un aéronef télécommandé ou encore un système automatique de type Drone. Pour ce faire l'aéronef évolue au-dessus de la zone considérée et effectue la détermination de la position de chaque élément remarquable au moyen des mesures effectuées par le radar, qui donnent la position relative de l'élément considéré par rapport à l'aéronef et des informations de position géographique de l'aéronef, position généralement déterminée à l'aide d'un système de type récepteur GPS localisé à bord de l'aéronef. Par suite la position de l'aéronef étant connue avec précision, la position de l'élément considéré peut être déterminée avec une grande précision, pour peu que les mesures fournies par le radar aient la précision voulue.

Cependant, il existe des circonstances où la détermination de la position des éléments remarquables ne peut être réalisée de cette façon avec une précision suffisante.

C'est notamment le cas si la détermination de la position relative des éléments remarquables par rapport au véhicule chargé de réaliser la cartographie, n'est pas réalisée avec la précision voulue; parce que les mesures réalisées par le système de détection n'ont pas la précision voulue par exemple.

C'est encore le cas si la position géographique du véhicule est connue avec une précision insuffisante. C'est par exemple le cas si le véhicule est un aéronef qui ne dispose pas de système GPS. C'est encore le cas si, par exemple, la zone à cartographier est une zone immergée, sous-marine. La cartographie est alors réalisée à l'aide d'un système sonar porté par un véhicule sous-marin autonome ou non, qui se trouve dans l'impossibilité de déterminer sa position à l'aide du système GPS, les informations GPS étant, de manière connue, inaccessibles à un véhicule évoluant sous l'eau.

Dans ces deux derniers cas, la détermination de la position du véhicule à chaque instant de son déplacement est réalisée en mettant en oeuvre des moyens conventionnels, des moyens inertiels par exemple, qui, partant d'une position de départ, supposée connue avec précision, déterminent le déplacement relatif du véhicule par rapport à cette origine.

Cette technique de navigation dite à l'estime permet d'estimer la position du véhicule à tout instant. Les mesures réalisées à l'aide de tels moyens sont alors généralement moins précises. De plus on constate une dérive au cours du temps de la détermination de la position absolue du véhicule par rapport à sa position réelle. Au final la position absolue des éléments remarquables est estimée avec une précision moindre, une précision parfois même insuffisante.

En ce qui concerne la cartographie d'une zone sous-marine, celle-ci est généralement réalisée au moyen d'un véhicule sous-marin, un drone sous-marin par exemple, équipé d'un sonar latéral et évoluant au-dessus de la zone à cartographier, à proximité du fond. Les mesures de position sont généralement réalisées par insonification rasante du fond marin.

Ce type d'insonification permet avantageusement de repérer un objet remarquable non pas par l'écho qu'il réfléchit mais par l'ombre "acoustique" qu'il projette sur le fond comme cela est décrit dans la demande de brevet WO 91/02989. La détection sur ombre acoustique est particulièrement avantageuse pour repérer certains objets, certaines mines sous-marines furtives en particulier, qui réfléchissent peu ou pas l'onde sonore émise par le sonar mais qui font néanmoins écran et produisent de ce fait une ombre acoustique. On rappelle ici que l'ombre acoustique projetée par un objet peut ici être définie par la zone du fond pour laquelle l'objet considéré constitue un écran empêchant son insonification.

Par suite en mettant en oeuvre tout traitement approprié connu, il est possible de déterminer les contours de l'ombre acoustique projetée par un objet remarquable, contours qui permettent de déterminer la position et le profil de l'objet lui-même et de réaliser une classification des objets localisés, de manière plus aisée qu'à partir des échos réfléchis par les objets eux-mêmes, notamment si cette classification est réalisée de manière automatique.

Cependant la détermination de la position exacte d'un objet, à partir de l'ombre acoustique qu'il produit, est parfois difficile et en tout cas approximative. Elle dépend en particulier de l'angle d'insonification et de la direction selon laquelle l'objet est insonifié. Par suite, même si la position absolue du véhicule est connue à tout instant avec précision, la position relative de l'objet par rapport au véhicule, et par conséquent sa position absolue, peut n'être déterminée, estimée, qu'avec un biais dû au décalage entre la position de l'ombre acoustique et celle de l'objet réel.

En outre, la zone à cartographier étant insonifée selon différentes directions, du fait des déplacements du véhicule au-dessus de cette zone, il arrive parfois qu'un même objet remarquable, soit insonifié plusieurs fois suivant des directions différentes. Il produit alors des ombres acoustiques distinctes qui donnent lieu à la détermination, pour un même objet, de plusieurs détections ayant des positions estimées différentes, et qui conduit à identifier plusieurs observations pour un seul objet réel.

Par suite il est alors nécessaire d'affiner la cartographie réalisée en mettant en oeuvre des moyens d'association des observations appropriés pour déterminer si deux éléments caractéristiques localisés constituent ou non un seul et même élément considéré sous des angles différents.

Dans les zones de densité faible ou moyenne, les solutions connues réalisent avec succès l'appariement des observations relatives à un même objet. Par suite, la position d'un objet ayant fait l'objet de localisations multiples, ces localisations ayant été reconnues comme relatives à ce même objet, peut alors être ré-estimée avec une plus grande précision par des techniques de calcul de moyennes pondérées.

En revanche, aucun profit particulier n'est tiré de cette opération de recalage en ce qui concerne les autres objets remarquables qui n'ont fait l'objet que d'une seule détection. La cartographie qui en résulte permet donc seulement de fusionner les observations représentant un même objet, et ainsi d'améliorer la précision de l'estimation de la position de cet objet. Elle ne permet pas d'améliorer la précision globale de la localisation des autres objets détectés sur la zone cartographiée.

Par ailleurs, ces solutions connues ne s'intéressent pas au problème posé par les erreurs de positionnement consécutives à l'erreur de positionnement absolue du véhicule, erreur qui est due principalement à la précision et à la dérive du système de navigation qui estime la position absolue du véhicule.

Un but de l'invention est notamment de proposer un moyen permettant d'améliorer la précision de la cartographie d'une zone sous-marine, en particulier lorsque celle-ci est réalisée à partir d'un véhicule sous-marin se déplaçant sur la zone considérée et insonifiant la zone au moyen d'un sonar latéral et que la détection et la détermination de la position des objets remarquables de la zone sont réalisées par détection des ombres acoustiques ou des échos produits par ceux-ci.

Un autre but de l'invention est de limiter l'influence des erreurs de position du système de navigation, sur la mesure de position des objets observés et sur la détermination de la position absolue du véhicule.

A cet effet l'invention a pour objet un procédé d'estimation et de correction dynamique de la position absolue d'objets observés sur le fond marin par un système de détection sonar porté par un véhicule évoluant au-dessus du fond, un objet étant détecté par l'observation de son ombre acoustique, cette observation donnant lieu à la création d'un objet fictif, ou contact, dont la position estimée est initialement celle associée à l'observation qui lui a donné naissance et qui représente l'objet détecté. Le procédé selon l'invention comporte deux phases.

Une première phase consiste à construire un maillage fictif à partir des observations effectuées au cours du temps, le maillage étant construit en représentant chaque observation effectuée par un noeud dont la position est celle de l'observation et en reliant les noeuds les uns aux autres par l'intermédiaire de liaisons élastiques fictives. Chaque nouvelle observation est associée à un noeud qui est relié à un point d'ancrage fictif, situé sur le fond marin, par une première liaison élastique fictive. Ce noeud est intégré au maillage existant par l'intermédiaire d'un ensemble de liaisons élastiques fictives, chacune de ces liaisons reliant le noeud à des noeuds existants du maillage qui correspondent à des observations précédant l'observation considérée dans le temps. Un noeud associé à une nouvelle observation est par ailleurs lié par une autre liaison élastique fictive au noeud associé au contact correspondant à cette nouvelle observation, noeud dont la position est celle du lieu d'observation. Les liaisons élastiques ainsi établies ont des longueurs initiales telles que compte-tenu des positions des différents noeuds elles n'exercent aucune tension sur les noeuds auxquels elles sont reliées.

Une seconde phase consiste, lorsque deux observations sont considérées comme concernant un même objet, à fusionner ces observations en leur associant un contact unique, dont la position est fonction des deux observations fusionnées. La fusion se traduit au niveau du maillage par le remplacement des noeuds associés aux contacts correspondant initialement aux observations par un noeud unique associé au nouveau contact formé. Ce noeud est lié aux noeuds associés aux observations correspondantes par l'intermédiaire des liaisons fictives reliant initialement le noeud associé à chaque observation au noeud associé à son contact. L'introduction de ce noeud commun dans le maillage induit sur les noeuds associés aux observations fusionnées des tensions qui sont transmises aux autres noeuds du maillage par les diverses liaisons élastiques fictives et qui sont résolues par une modification des positions des noeuds constituant le maillage. La position modifiée de chaque noeud est attribuée à l'observation ou au contact associé au noeud considéré.

Selon l'invention, la première phase est mise en oeuvre pendant toute la durée de l'opération d'analyse du fond marin, tandis que la seconde phase est mise en oeuvre chaque fois que la fusion de deux observations est décidée.

Selon une forme de mise en oeuvre du procédé selon l'invention, lorsque observation particulière est considérée comme correspondant à un objet dont la position réelle est connue, on réalise une variante de la seconde étape consistant à modifier la position du noeud associé au contact correspondant à cette observation de façon à ce qu'il occupe de manière définitive la position de cet objet; l'association d'une observation et d'un objet connu ayant les mêmes effets sur le maillage et par suite, sur les positions des autres observations et contacts, que la fusion de deux observations.

Selon une forme de mise en oeuvre particulière, le procédé selon l'invention comporte une phase complémentaire, réalisée après la seconde phase, consistant à recalculer la position estimée du véhicule à partir des estimations réactualisées des positions des observations.

Selon une forme de mise en oeuvre du procédé selon l'invention, la liaison élastique fictive liant un noeud i correspondant à une nouvelle observation à son point d'encrage au sol est une liaison dont la longueur initiale nulle, dont la raideur $k_A$ est définie par la relation:

$$K_A(i) = \frac{1}{\sigma_i^2}$$

$\sigma_i$ correspondant à l'incertitude de mesure de la position de l'observation i.

Selon une forme de mise en oeuvre du procédé selon l'invention, la liaison élastique fictive liant un noeud i correspondant à une nouvelle observation au noeud du maillage correspondant à une observation j antérieure est une liaison dont la longueur est déterminée par les position des noeuds au moment de l'établissement de la liaison de façon à ce que le noeud correspondant à la nouvelle observation se trouve positionnée à la verticale de son point d'ancrage (42) et que la liaison n'exerce aucune contrainte sur les noeuds considérés, et dont la raideur $k_L$ est définie par les relations:

$$K_L(i, j) = \frac{1}{\sigma_{ij}^2} \quad \text{et} \quad \sigma_{ij} = \sqrt{\sigma_i^2 + \sigma_j^2}$$

$\sigma_i$ et $\sigma_j$ correspondant respectivement aux incertitudes de mesures des positions des observations i et j.

Selon une forme de mise en oeuvre du procédé selon l'invention, la liaison élastique fictive liant un noeud i correspondant à une nouvelle observation au noeud correspondant à son contact est une liaison dont la longueur initiale nulle, dont la raideur $k_c$ est définie par la relation:

$$K_C(i, k) = \frac{1}{\sigma_i^2}$$

$\sigma_i$ correspondant à l'incertitude de mesure de la position de l'observation i.

Selon une forme de mise en oeuvre du procédé selon l'invention, la propagation des contraintes imposées par des fusions d'observations se traduisant par une modification des positions des différents noeuds constituant le maillage, on définit un vecteur PI des positions initiales des différents noeuds, dont la taille varie au cours du temps à mesure que des observations nouvelles sont effectuées et dont les composantes forment une liste de N composantes, les $N_{obs}$ premières composantes étant relatives aux noeuds associés à des observations et les $N-N_{obs}$ dernières composantes étant relatives aux noeuds associés à des contacts, chaque composante correspondant à la position occupée par un noeud lors de son introduction dans le maillage, et un vecteur PC des positions corrigées des différents noeuds constituant le maillage à un instant donné dont la taille varie au cours du temps à mesure que des observations nouvelles sont effectuées et que des fusions ont lieu, le vecteur PC, étant défini à partir du vecteur PI par la relation suivante:

$$PC = PI + Q_{opt}$$

Dans laquelle $Q_{opt}$ représente le vecteur des déplacements nodaux optimaux dont chacune des composantes correspond au terme de correction à appliquer à la composante correspondante du vecteur des positions initiales PI pour déterminer la composante correspondante du vecteur des positions corrigées; chaque composante du vecteur $Q_{opt}$ étant fonction de la configuration du maillage global à l'instant considéré et des caractéristiques des liaisons élastiques fictives reliant les noeuds entre eux.

Selon cette forme de mise en oeuvre du procédé selon l'invention, le vecteur des déplacements nodaux optimaux $Q_{opt}$ peut être défini par la relation suivante:

$$Q_{opt} = - [M + C]^{-1} \cdot C \cdot PI,$$

dans laquelle M et C représentent deux matrices carrées dont les dimensions sont égales au nombre de noeuds du maillage à l'instant considéré, ces matrices étant préalablement initialisée à zéro;

l'établissement de la matrice M étant réalisé de proche en proche en deux phases:

- une première phase durant laquelle les valeurs des éléments (i, i) situés sur la diagonale de la matrice, un élément de la diagonale caractérisant la liaison de chaque noeud associé à une observation i à son ancrage, sont calculées à partir de la relation suivante:

$$M(i, i) = M(I, I) + k_A(i) \qquad \text{avec} \quad K_A(i) = 1/\sigma_i^2$$

- une deuxième phase durant laquelle la valeur de chaque élément (i, j) de la matrice, caractérisant une liaison existant entre les noeuds d'une observation i et d'une observation j, est calculée à partir des relations suivantes:

$$M(i, i) = M(i, i) + k_L(i, j) \, ,$$

$$M(j, j) = M(j, j) + k_L(i, j)$$

et

$$M(i, j) = M(i, j) - k_L(i, j)$$

$$M(j, i) = M(j, i) - k_L(i, j)$$

avec

$$K_L(i, j) = 1/\sigma_{ij}^2 \text{et} \qquad \sigma_{ij} = \sqrt{\sigma_i^2 + \sigma_j^2}$$

l'établissement de la matrice C étant réalisé de proche en proche en deux phases:

- une première phase durant laquelle la valeur de chaque élément (i, k) de la matrice, caractérisant une liaison existant entre le noeud associé à une observation i et celui associé à un contact k, est calculée à partir des relations suivantes:

$$C(i, i) = C(i, i) + k_C(i, k)$$

$$C(N_{obs}+k, N_{obs}+k) = C(N_{obs}+k, N_{obs}+k) + k_C(i, k)$$

$$C(i, N_{obs}+k) = C(i, N_{obs} +k) - k_C(i, k)$$

$$C(N_{obs}+k, i) = C(N_{obs} +k, i) - k_C(i, k)$$

avec

$$K_C(i, k) = 1/\sigma_i^2$$

Où $N_{obs}$ représente le nombre d'observations réalisées.

L'invention a incidemment pour objet un procédé de cartographie en temps différé d'une zone de fond marin cette cartographie étant réalisée à partir des positions d'objets observés par un système de détection sonar lors d'une opération d'observation de la zone du fond marin considérée durant laquelle le sonar mesure la position des objets détectés, caractérisé en ce qu'il met en oeuvre le procédé selon l'une quelconque des revendications 1 à 3 sur les observations mémorisées, les positions des observations ainsi recalculées étant utilisées pour renseigner la carte de la zone considérée.

Avantageusement le procédé selon l'invention permet de tirer profit de l'amélioration de l'estimation de la position de certains objets observés plusieurs fois par fusions des observations, considérées comme étant relatives à un même objet, pour améliorer automatiquement l'estimation de position de l'ensemble des objets observés. Avantageusement encore, il permet d'améliorer l'estimation de la position absolue du véhicule qui effectue ces observations par effet de recalage.

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:

- la figure 1, l'illustration schématique d'une opération de cartographie d'une zone du fond marin par un véhicule équipé d'un système de détection utilisant un sonar latéral;
- la figure 2, une illustration présentant un détail agrandi de l'illustration de la figure 1;
- la figure 3, un organigramme de principe du procédé selon l'invention;
- la figure 4, une illustration du principe de constitution du réseau fictif de liaisons élastiques selon l'invention;
- les figures 5 et 6, des illustrations relatives au principe de fonctionnement du procédé selon l'invention;

Dans la suite de la description, le procédé selon l'invention est décrit dans son application à une opération de cartographie sous-marine à l'aide d'un système sonar porté par un véhicule sous-marin en mouvement au-dessus de la zone du fond marin que l'on souhaite cartographier. Cette application particulière n'est, bien entendu, pas limitative du champ et de la portée de l'invention. Toute application du procédé selon l'invention à un contexte de cartographie ou de relevé de positions entre naturellement dans le champ de protection du brevet.

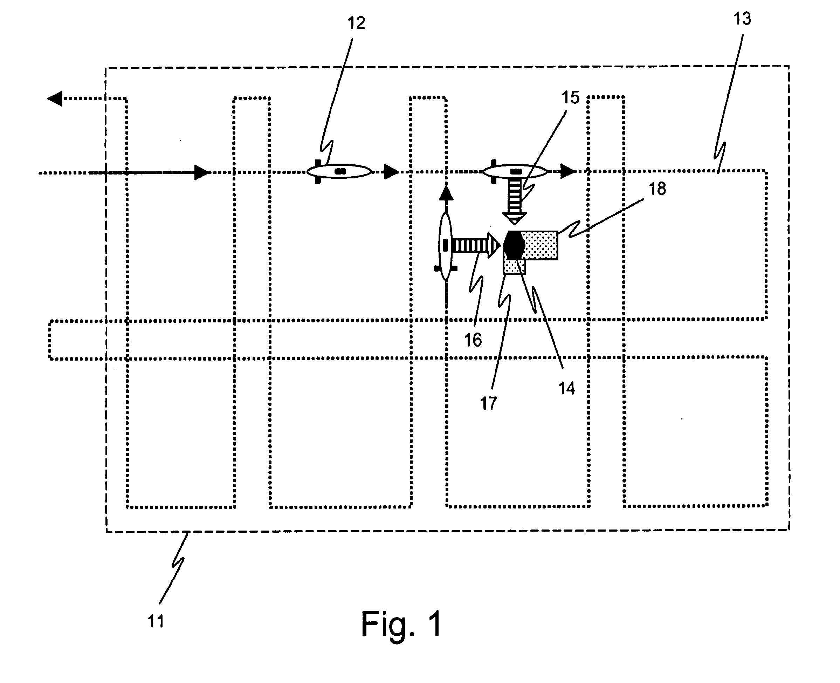

La figure 1 présente une illustration schématique du scénario d'une mission de cartographie réalisée par un véhicule. Une telle mission a généralement pour objet de repérer et d'effectuer une localisation aussi précise que possible de divers objets posés sur le fond marin. Les objets d'intérêt sont ici généralement des objets immobiles qui peuvent aussi bien consister en des épaves, des éléments de relief (des rochers) ou encore des objets manufacturés posés sur le fond ou partiellement enfouies. Pour réaliser la localisation des objets présents dans une zone 11 à observer, on utilise généralement un véhicule sous-marin 12 équipé de moyens de détection, un sonar latéral par exemple, que l'on fait se déplacer au-dessus de la zone 11 suivant un trajet 13. La forme et la durée du trajet est principalement fonction de la configuration et de la portée des moyens de détection. Selon la nature de la mission effectuée, le trajet 13 peut par ailleurs être effectué une seule fois ou répété autant de fois que le permet la durée de la mission. En outre une même mission peut prévoir l'enchainement de plusieurs trajets 13 différents permettant de réaliser des observations du fond marin suivant des perspectives différentes. Ainsi un même objet 14 présent dans la zone cartographiée peut être observé sous différents angles au cours d'un même trajet ou au cours des trajets successifs effectué par le véhicule sous-marin portant le système de détection.

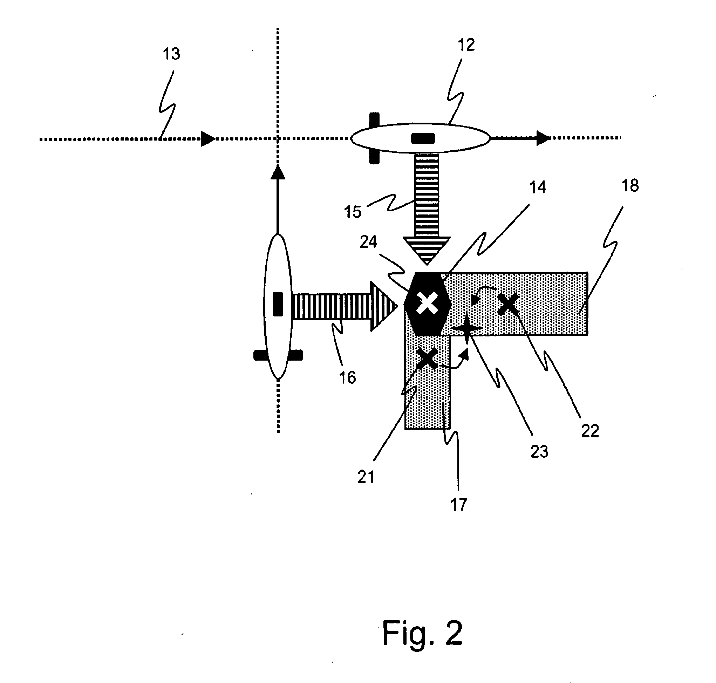

Comme il a été dit précédemment la cartographie d'une zone sous-marine est généralement réalisée à partir des observations des ombres acoustiques des objets 14 détectés sur le fond. Or l'observation et l'analyse de l'ombre 17, 18 portée par un objet ne permet d'effectuer qu'une simple estimation de la position réelle de l'objet, estimation d'autant plus incertaine que l'ombre portée est plus étendue. C'est pourquoi il est avantageux que chaque objet présent dans la zone 11 fasse l'objet de plusieurs observations, symbolisées par les flèches 15 et 16, sous des angles de préférence différents. De la sorte, comme l'illustre l'illustration détaillée de la figure 2, l'exploitation conjointe des différentes estimations réalisées séparément à partir de chacune des observations 15, 16 et symbolisées par les croix 21 et 22 sur la figure, permet de réaliser une estimation de la position d'un contact commun associé aux deux observations 15 et 16, symbolisée par l'étoile 23, la position de ce contact étant plus proche de la position réelle de l'objet, position symbolisée par la croix 24. On rappelle ici que selon l'invention contrairement à une observation qui est bien réelle, un contact est un objet fictif caractérisé par une position et une incertitude sur cette position, la position du contact à un instant donné est censée représenter une estimation pour cet instant de la position d'un objet pour lequel des observations ont été réalisées. A ce titre, selon l'invention une observation est toujours associée à un contact, un contact pouvant quant à lui être associé à plusieurs observations. Par suite lorsqu'un contact est associé à une seule observation, sa position est celle de l'observation en question.

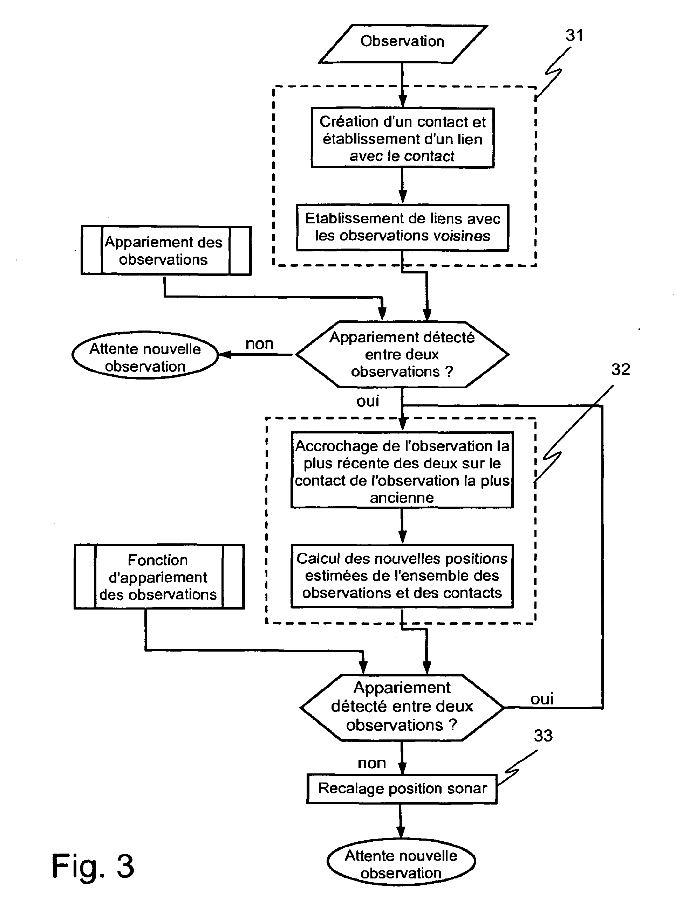

La figure 3 présente un organigramme de principe du procédé selon l'invention. Ce procédé a pour objet de réaliser deux fonctions principales:

La première fonction consiste à élaborer de manière continue, au fil des observations réalisées, un maillage élastique fictif constitué de noeuds reliés les uns aux autres par un réseau de liens élastiques fictifs. Chaque noeud représente, pour le maillage, une observation relative à un objet détecté, observation dont la position représente une estimation de la position de l'objet à l'origine de cette observation. La construction de ce maillage fictif est réalisée par les accrochages successifs au maillage déjà existant de noeuds correspondant à l'apparition au cours du temps de nouvelles observations. Selon l'invention, un nouveau noeud est arrimé au maillage existant par l'intermédiaire de liens élastiques fictifs ces liens reliant le nouveau noeud aux noeuds les plus récemment arrimés au maillage. Ces liens élastiques fictifs ont des longueurs nominales telles que l'accrochage d'un nouveau noeud, représentant une nouvelle observation, n'impose aucune contrainte en terme de position aux noeuds du maillage existant. Chaque ajout d'une observation se traduit par ailleurs par l'ajout d'un noeud fictif supplémentaire correspondant au contact et d'une liaison élastique entre le noeud représentant l'observation et celui représentant le contact.

La seconde fonction consiste, lorsque deux observations données peuvent être associées à un même objet, à traduire cette association par la fusion des contacts associés et en associant les deux observations à un seul et même contact. Cette fusion se traduit par l'accrochage de chacun des deux noeuds au noeud correspondant au contact unique. Par suite l'accrochage étant réalisé au moyen des liaisons élastiques reliant initialement le noeud correspondant à chaque observation au noeud correspondant à son contact, il a pour effet d'imposer un rapprochement des noeuds correspondant aux deux observations concernées et, par un phénomène de propagation de contraintes, une modification des positions des noeuds de l'ensemble du réseau élastique, à provoquer une modification des positions des autres noeuds du maillage. Ainsi, la position des noeuds du maillage étant modifiée, on peut attribuer à chaque observation associée à un noeud du maillage, une position corrigée correspondant à la position prise par le noeud correspondant.

Ainsi, le rapprochement des noeuds correspondant à la fusion de deux observations permet d'associer à l'objet à l'origine des deux observations, un contact unique dont la position estimée tient compte des deux observations. Cette position estimée est plus précise et plus exacte que ne l'était la position estimée à partir de l'une ou l'autre des observations. Il permet également grâce à la propagation de la contrainte imposée par les liaisons élastiques, d'appliquer une correction à la position de chaque noeud du maillage. Par suite, les positions des observations associées à ces noeuds du maillage élastique fictif, position qui représente elle-même une estimation de la position de l'objet ayant donné lieu à cette observation, sont modifiées et bénéficient de l'accroissement de précision apporté à la détermination des positions des observations fusionnées. L'estimation de la position de l'objet correspondant se trouve ainsi avantageusement exploitée.

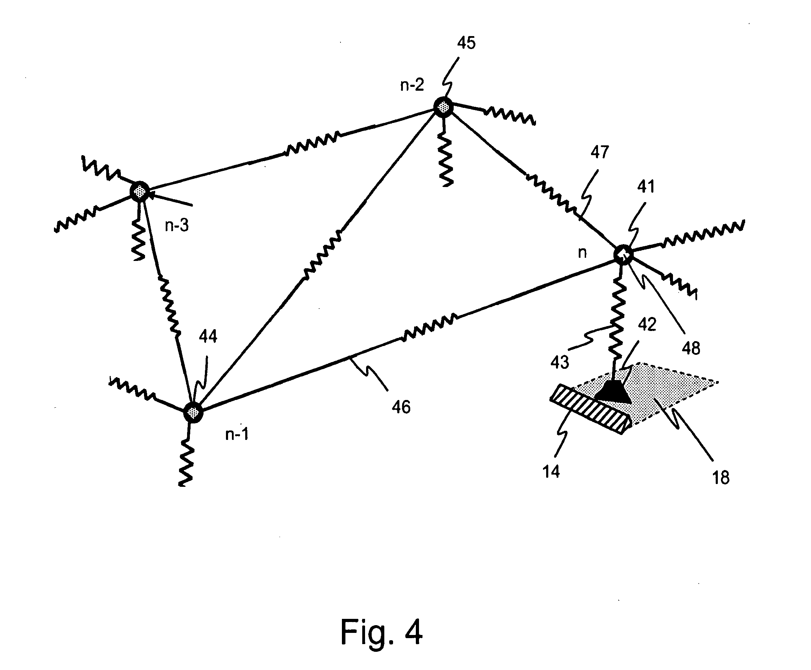

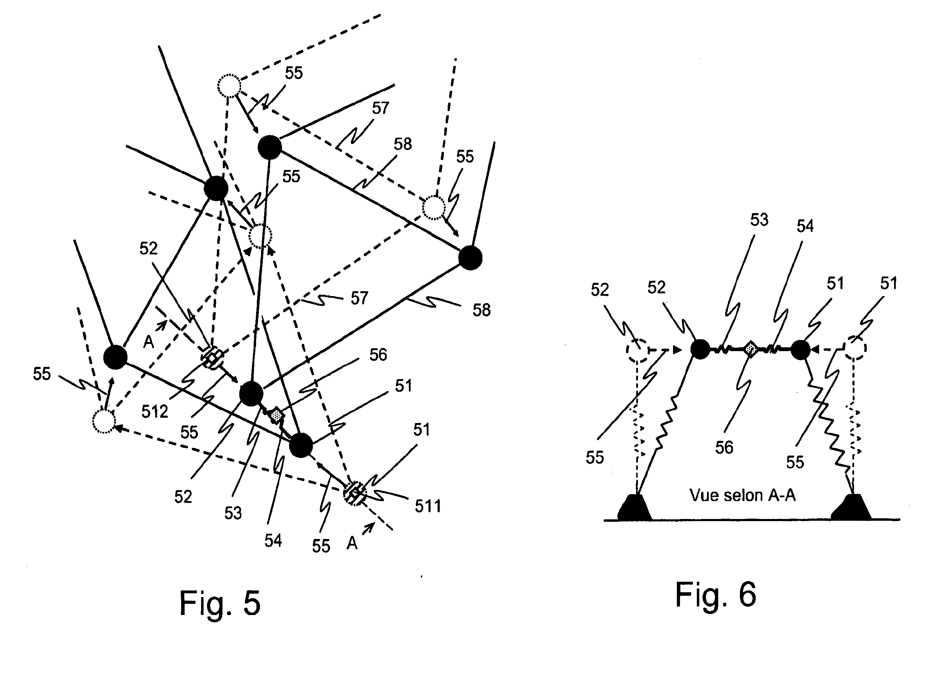

A cet effet le procédé selon l'invention comporte deux étapes principales 31 et 32, comme l'illustre la figure 3. La figure 4 illustre plus particulièrement le fonctionnement de la première étape 31, tandis que les figures 5 et 6 illustrent le fonctionnement de la deuxième étape 32. La figure 5 présente une vue schématique, de dessus permettant de comprendre les conséquences engendrées par la fusion de deux observations. La figure 6 présente une vue partielle de la même situation dans un plan A-A.

La première étape 31 consiste, pour chaque nouvelle observation d'objet réalisée, à assurer l'accrochage d'un noeud correspondant à ladite observation au réseau de liens élastiques fictifs existants. Comme l'illustre la figure 4, l'accrochage d'un noeud 41 au maillage déjà construit est réalisé au moyen de liens élastiques fictifs, 46, 47, de raideurs données dont les longueurs sont telles que leur mise en place n'occasionne l'apparition d'aucune tension dans le réseau déjà existant, le réseau élastique fictif étant en position d'équilibre. L'ajout d'une observation se traduit aussi par l'ajout d'un ancrage fictif au sol 42 et d'une liaison fictive 43 entre cet ancrage et le noeud 41 correspondant à l'observation. Enfin l'ajout d'une observation se traduit aussi par l'ajout d'un noeud fictif supplémentaire 48 correspondant au contact associé à l'observation et d'une liaison fictive, non visible sur la figure 4, entre le noeud 41 représentant l'observation et le noeud 48 représentant le contact.

La deuxième étape 32 consiste quant à elle, lorsque deux observations sont jugées comme pouvant être relatives à un même objet, à réaliser la fusion, en un noeud unique 56, des noeuds 511 et 512 correspondant aux contacts associés à ces observations et à réaliser l'accrochage du noeud 56 résultant de la fusion aux noeuds correspondant à ces observations. Comme l'illustre la figure 5, l'accrochage des noeuds 51 et 52 correspondant à chacune des observations au noeud 56 correspondant au contact résultant de la fusion des contacts, est réalisé au moyen des liens fictifs 53 et 54, reliant initialement ces noeud 51 et 52 aux noeuds 511 et 521 associés aux contacts initiaux. Ceci provoque alors un rapprochement des noeuds 51 et 52 des deux observations, rapprochement qui se traduit par l'apparition de tensions qui se propagent au sein du maillage élastique. La résolution de ces tensions conduit à un nouvel équilibre qui se traduit par une modification globale des positions des noeuds du maillage correspondant aux autres observations. La perturbation créée conduit ainsi à la mise en place d'un nouvel état d'équilibre du maillage élastique qui se traduit lui-même par le déplacement de certains noeuds et la modification de leurs positions.

Comme il a été dit précédemment, les observations effectuées par le véhicule sont associées à des noeuds fictifs ancrés sur le fond marin et reliés les uns aux autres au fur et à mesure de leur constitution 47, 46. En pratique comme l'illustre la figure 4, chaque nouvelle observation 41, c'est-à-dire chaque nouveau noeud, est d'abord ancrée au sol en un point d'ancrage 42 fictif par l'intermédiaire d'une liaison élastique fictive 43, de longueur nulle et de raideur $k_A$ donnée. Ce point d'encrage occupe une position fixe et invariante. Il est par exemple positionné au sol, à la verticale de la position initiale estimée de la nouvelle observation.

Ce nouveau noeud 41, est également chaîné avec un certain nombre de noeuds du maillage, deux noeuds par exemple, représentant des observations 44 et 45 qui précèdent temporellement la nouvelle observation. De la même façon le noeud correspondant à l'observation précédente 44 est chainée avec les noeuds associés aux observations qui la précèdent parmi lesquelles se trouve l'observation 45. Dans l'exemple, le chainage est réalisé en reliant les noeuds 41 aux noeuds 44 et 45 aux moyens de liaisons élastiques 46 et 47 de longueurs respectives $l_2$ et $l_3$ et de raideurs $k_2$ et $K_3$ données.

Selon l'invention, les longueurs des liaisons 46 et 47 entre le noeud associé à l'observation 41 et les noeuds associés aux observations précédentes 44 et 45 sont définies par les distances séparant les positions initiales des observations 41, 44 et 45 telles que le noeud 41 se trouve positionnée à la verticale de son point d'ancrage 42 et que les liaisons 46 et 47 ne transmettent aucune contrainte aux noeuds 41, 44 et 45 liés entre eux.

Il est à noter que la longueur de la liaison 43 d'ancrage ne joue ici pas de rôle particulier: l'invention se place dans un plan horizontal, et n'est représentée en trois dimensions que pour faciliter sa représentation.

Il est à noter également que, dans le contexte de l'invention, la fusion de deux observations est considérée comme le résultat d'un processus de d'association, d'appariement, des observations effectuées conduit parallèlement au procédé selon l'invention. Ce processus d'appariement dont l'objet est de considérer des observations séparées et de déterminer si elles peuvent ou non correspondre à un même objet n'est pas décrit ici et peut être mené par tout procédé connu par ailleurs. Par suite, le procédé selon l'invention est, comme l'indique la figure 3, supposé être informé régulièrement de la fusion de deux observations.

Lorsqu'une telle information est transmise, le procédé selon l'invention effectue, au cours de l'étape 32, une fusion des deux contacts initialement associés aux observations, en un seul contact. Le noeud 56 associé à ce contact unique est alors lié aux noeuds 51 et 52, associés aux deux observations fusionnées, au moyen des liaisons élastiques fictives 53 et 54, de raideur $k_4$ et $k_5$ qui reliaient initialement (avant fusion) chaque observation à son contact.

La fusion a pour conséquence la modification des positions des noeuds 51 et 52 qui viennent finalement se localiser sur deux nouvelles positions. Le déplacement de chacun de ces deux noeuds, matérialisé par les flèches 55, correspondant aux observations fusionnées est à la fois fonction des paramètres propres à chacune des deux observations mais également de la réaction du réseau de liaisons élastiques fictives auquel ils sont liés. Le jeu des contraintes élastiques qui se propagent à travers le maillage conduit ainsi, comme l'illustre la figure à une modification globale des positions des différents noeuds du maillage, modification symbolisée par les flèches 55 sur la figure 5. De la sorte il est possible d'attribuer à chacune des observations correspondant aux différents noeuds constituant le maillage, une nouvelle position correspondant à recalage de l'observation, c'est-à-dire à une détermination affinée de la position de l'objet correspondant à cette observation.

Selon l'invention, les modifications des positions des différents noeuds, consécutives à la mise en place d'une liaison supplémentaire entre les noeuds associés à deux observations fusionnées, correspondent à un retour à l'équilibre du maillage élastique fictif. Cette évolution du maillage est matérialisée sur la figure 5 par le passage du maillage représenté en traits pointillés 57 (état avant fusion) au maillage représenté en traits pleins 58 (état après fusion).

A l'issue de l'étape 32, on dispose donc d'un jeu d'observations dont les positions ont été automatiquement modifiées conformément aux modifications des positions des noeuds correspondant au sein du maillage fictif. La mise en place de ce maillage élastique fictif a avantageusement pour conséquence concrète et réelle de permettre à chaque observation de bénéficier, de manière automatique, des conséquences de la fusion de deux autres observations. Ainsi à chaque fusion, la position de chacune des observations est modifiée de telle façon que l'accroissement de précision normalement obtenu sur l'estimation de la position d'un objet lorsqu'on peut lui associer deux observations, bénéficie également, dans une moindre mesure cependant, à la détermination de la position estimée des objets à l'origine des autres observations à partir desquelles est construit le maillage fictif. Par suite la position estimée de chacun des objets se trouve affinée.

Dans la suite de la description on s'intéresse à la façon dont est établi le réseau de liaisons élastiques et aux règles qui régissent son évolution au cours du temps et au rythme de fusions d'observations. Ce maillage est construit de façon à ce que les modifications des positions des observations associées au maillage se produisent dans un sens qui améliore la précision de l'estimation des objets correspondant à ces observations. Pour ce faire, on formalise en premier lieu les notions suivantes:

L'observation d'une zone du fond marin donnée, se traduit par une succession temporelle d'observations $O_i$ qui correspondent à la détection d'objets, au moyen d'un l'algorithme de détection automatique par exemple.

En pratique, chaque observation Oi correspond à une ombre présente dans l'image sonar et est caractérisée par une position initiale Pi, une position corrigée Ci et une incertitude de position σi.

L'incertitude de position $\sigma_i$ sur l'observation $O_i$ réalisée est consécutive à l'incertitude de détection $\delta_i$ du système et à l'incertitude de positionnement $\alpha_i$ du véhicule sous-marin. On considère les deux incertitudes comme indépendantes de telle sorte que l'on peut écrire:

$$\sigma_i = \sqrt{\delta_i{}^2 + \alpha_i{}^2} \qquad [1]$$

On définit par ailleurs un contact $T_j$ comme une entité représentant un objet réel posé sur le fond. Par nature un contact n'est défini que s'il est associé à au moins une observation qui matérialise le fait qu'un objet a été détecté. Réciproquement, une observation est toujours associée à un contact. Un contact est caractérisé par une position estimée $TE_j$ (résultant d'un calcul) et une incertitude estimée $\sigma T_i$. Un contact n'a pas de position initiale, de par le maillage, occupe automatiquement la position de l'observation à laquelle il est associé. En outre en dehors des cas ou deux observations fusionnent, le contact est assimilé, d'un point de vu géographique, à l'observation à laquelle il est associé. Une observation est par ailleurs liée à un contact par une liaison fictive de longueur nulle.

Le réseau de liens élastiques fictif, ou maillage global, établit des liaisons entre les observations, ou plus exactement entre les noeuds correspondant aux observations dans le maillage fictif, comme cela a été décrit qualitativement dans le texte qui précède. C'est un maillage linéaire liant fictivement, de proche en proche au cours du temps, chaque observation à des observations précédentes. Un noeud est ainsi défini comme un endroit du maillage formant l'extrémité d'une liaison élastique, ou le point de connexion de plusieurs liaisons. Le déplacement d'un noeud sous l'action des contraintes pouvant apparaître dans le maillage constitue un déplacement nodal.

Selon l'invention, le maillage élastique fictif est défini comme étant à l'équilibre, au repos, exempt de toute contrainte, tant qu'aucune fusion d'observation n'est prise en compte. En particulier, chaque liaison élastique fictive, 43, 46 ou 47 (liaisons entre noeuds associés à des observations ou liaison d'ancrage), est d'une longueur juste suffisante pour n'exercer aucune contrainte sur le maillage tant qu'aucune fusion d'observations n'est réalisée. Durant cette phase la position associée à chaque noeud 41 est celle du point d'ancrage 42 dont la position correspond à la position initiale $P_i$ de l'observation.

Selon l'invention, le maillage global se trouve en revanche soumis à des contraintes qui apparaissent lors de la fermeture de boucles, c'est à dire lorsque le système identifie qu'une observation réalisée est susceptible d'être rattachée à un objet déjà détecté et associé à une autre observation. Dans une telle circonstance l'étirement des liens 53 et 54 reliant les deux noeuds 51 et 52, étirement consécutif à l'accrochage de ces noeuds au noeud associé au contact unique 56, engendre des tensions qui augmentent l'énergie potentielle du maillage global, énergie qui peut être définie comme la somme des énergies potentielles de toutes les liaisons élastiques constituant le maillage global. Selon l'invention on fait alors évoluer le maillage global de façon à ce qu'il conserve l'énergie potentielle globale la plus faible possible. Cette évolution se traduit par un changement de position pour tout ou partie des noeuds constituant le maillage global. Par suite cette évolution du maillage fictif peut être directement transposée au monde réel en associant à chaque observation la position modifiée du noeud auquel elle est associée et qui la représente dans le maillage fictif. De la sorte, au fur et à mesure des fusions, les positions des différentes observations peuvent être affinées sans qu'il soit nécessaire d'effectuer plusieurs fois toutes les observations, ni même qu'il soit nécessaire que chaque observation fasse l'objet d'une fusion.

Comme il a été dit précédemment, le procédé selon l'invention consiste dans un premier temps à construire au fil du temps, observation après observation, le maillage fictif global et à modifier l'organisation de ce maillage pour intégrer les effets des fusions d'observations. Ce maillage fictif peut bien entendu être construit de différentes façons. De la même façon, son comportement en cas de fusion d'observation peut être décrit par différents jeux de règles. Dans la suite du texte on décrit, à titre d'application, une façon de mettre en oeuvre le procédé selon l'invention.

On rappelle ici que le procédé selon l'invention consiste principalement à élaborer un maillage élastique fictif à partir des différentes observations réelles réalisées, à déterminer des règles d'évolution suivies par ce maillage fictif lorsqu'il est soumis à certaines contraintes qui trouvent leur origine dans des événements réels touchant les observations réalisées, l'opportunité de fusionner deux observations notamment, puis à faire évoluer la géométrie du maillage lorsque de tels événements se produisent et à retranscrire au niveau des observations réelle la modification de la géométrie du maillage, sachant que cette modification se traduit par une modification des positions des noeuds du maillage qui représentent les observations effectuées, la modification de la position d'une noeud se traduisant dans la réalité par une modification correspondante de la position estimée de l'observation (ou du contact) associée à ce noeud.

Le maillage fictif décrit précédemment étant constitué de noeuds reliés les uns aux autres par des liaisons élastiques, il est possible de définir une énergie potentielle. Pour chacune des liaisons élastiques constituant le maillage cette énergie $E_i$ est donnée par la relation suivante:

$$E_i = \frac{K_i}{2} \cdot (\eta_i - \varepsilon_i)^2 \qquad [2]$$

dans laquelle $K_i$ est la raideur du ressort que forme cette liaison et dans laquelle $\eta_i$ et $\varepsilon_i$ représentent respectivement la longueur initiale et la longueur finale de la liaison.

Par suite, l'énergie potentielle du maillage global, par ailleurs égal à la somme des énergies potentielles de l'ensemble des liaisons élastiques constituant ce maillage, peut être exprimée par la relation suivante:

$$E = \frac{1}{2} \cdot Q^T \cdot M \cdot Q + \frac{1}{2} \cdot (PI + Q)^T \cdot C \cdot (PI + Q) \qquad [3]$$

PI représente ici le vecteur "position initiale" dont la dimension évolue au cours du temps. Ses composantes représentent la liste des positions des noeuds correspondant aux observations réalisées et la liste des positions des contacts associés. Sachant que la position initiale d'un contact n'est pas définie, les valeurs sont arbitrairement choisies nulles. Par suite on peut écrire:

$$PI = \begin{bmatrix} \left.\begin{matrix} P_i \\ ... \end{matrix}\right\} \text{Observations} \\ \left.\begin{matrix} 0 \\ ... \end{matrix}\right\} \text{Contacts} \end{bmatrix}$$

Le vecteur PI se présente ainsi comme une suite de N composantes, N étant un nombre qui varie au cours du temps, dont les $N_{obs}$ premières composantes sont relatives aux noeuds associées à des observations réalisées (dont le nombre est ici $N_{obs}$), et dont les $N-N_{obs}$ dernières composantes sont relatives aux noeuds associées à des contacts.

Q représente quant à lui le vecteur "déplacement nodal" dont la dimension et la structure évoluent comme celles de PI. Chacune de ses composantes représente le déplacement affectant la position du noeud considéré.

La matrice M est une matrice carrée dont la dimension est égale à la somme du nombre d'observations et du nombre de contacts. Elle décrit le maillage global construit de proche en proches de manière temporelle, sans les contraintes.

D'un point de vue pratique, la matrice M se construit comme suit:

Dans un premier temps, on initialise la matrice M comme une matrice ne contenant que des zéros.

Dans un deuxième temps, on détermine, pour chaque observation $O_i$ (chaque noeud), la valeur de l'élément M(i, i) correspondant à l'ancrage de l'observation. Par suite on peut écrire:

$$M(i, i) = M(i, i) + K_A(i)$$

où Ka,(i) représente la raideur de la liaison d'encrage du noeudau sol, donnée par la relation:

$$K_A(i) = \frac{1}{\sigma_i^2},$$

où $\sigma_i$ représente l'incertitude de position sur l'observation $O_i$.

Dans un troisième temps, on calcule pour chaque couple d'observations $(O_i, O_j)$ dont les noeuds associés sont liés l'un à l'autre, la raideur $K_L(i, j)$ de la liaison entre les noeuds i et j correspondant aux deux observations. $K_L(i, j)$ est défini par la relation:

$$K_L(i, j) = \frac{1}{\sigma_{ij}^2}$$

où $\sigma_{ij}$ représente l'incertitude relative de position définie par:

$$\sigma_{ij} = \sqrt{\sigma_i^2 + \sigma_j^2}.$$

$\sigma_i$ et $\sigma_j$ correspondant respectivement aux incertitudes de mesures des positions des noeuds associés aux observations i et j.

On calcule ensuite les éléments de la matrice M à l'aide des expressions suivantes:

$$M(i, i) = M(i, i) + K_L(i, j)$$

$$M(j, j) = M(j, j) + K_L(i, j)$$

et

$$M(i, j) = M(i, j) - K_L(i, j)$$

$$M(j, i) = M(j, i) - K_L(i, j)$$

La matrice M est ainsi construite de proche en proche: sa taille augmente au fur et à mesure que des observations nouvelles sont réalisées.

La matrice C est également une matrice carrée de même dimension que la matrice M. Elle décrit les contraintes du maillage, c'est à dire les relations entre les observations et les contacts, sachant que les contraintes sont produites par les fusions d'observations et qu'une fusion se traduite par le rattachement des noeuds associés aux observations fusionnées à un noeud associé à un contact commun.

D'un point de vue pratique, la matrice C se construit comme suit:

Dans un premier temps, on initialise tous les éléments de la matrice C à zéro.

Dans un deuxième temps, on calcule pour chaque couple formé par une observation $O_i$ et le contact $T_k$, $(O_i, T_k)$ auquel elle est associée, la raideur $K_c(i, k)$ de la liaison entre les noeuds correspondants. $K_c(i, k)$ est défini par la relation:

$$K_C(i, k) = \frac{1}{\sigma_i^2}$$

où $\sigma_i$ représentant l'incertitude de position sur l'observation $O_i$.

On calcule ensuite les éléments de la matrice C à l'aide des expressions suivantes:

$$C(i, i) = C(i, i) + K_C(i, k)$$

$$C(i, k + Nb_{obs}) = C(i, k + Nb_{obs}) - K_C(i, k)$$

$$C(k + Nb_{obs}, i) = C(k + Nb_{obs}, i) - K_C(i, k)$$

$$C(k + Nb_{obs}, k + Nb_{obs}) = C(k + Nb_{obs}, k + Nb_{obs}) + K_C(i, k)$$

Comme la matrice M, la matrice C est construite de proche en proche sa taille augmentant au fur et à mesure que des observations nouvelles sont réalisées.

Le vecteur PI ainsi que les matrices M et C étant définies, l'expression de la relation [3] donnant l'énergie E du maillage global apparaît comme une fonction du vecteur "déplacement" Q. Par conséquent, si l'on cherche à minimiser la valeur de E il convient de déterminer les valeurs optimales des composantes de Q, c'est-à-dire en particulier la valeur optimale du déplacement subi par chacun des noeuds, qui permettent cette minimisation. On montre à cet égard que le vecteur Q optimal est donné par l'expression suivante:

$$Q_{opt} = -[M + C]^{-1} \cdot C \cdot PI$$

Par suite on attribue au maillage fictif un nouveau vecteur position, le vecteur PC des positions estimées corrigées, qui définit les nouvelles positions des noeuds et par suite les nouvelles positions estimées des observations et de contacts associés à ces noeuds. Le vecteur PC des positions estimées corrigées est défini par la relation:

$$PC = PI + Q_{opt}$$

L'étape finale du procédé selon l'invention consiste donc à attribuer à chaque observation une position corrigée correspondant à la composante du vecteur PC relative au noeud correspondant.

Il est à noter que comme le vecteur PI, le vecteur PC contient les positions corrigées $TE_c(k)$ des contacts. Or dans la mesure où un contact n'a par définition pas de position initiale, la valeur de cette position corrigée correspond à la, valeur Q(k) correspondante du vecteur Q.

Il est à noter que de la même façon que le procédé selon l'invention permet, comme cela a été exposé, de tirer parti, pour l'ensemble des observations effectuées, de la possibilité de fusionner certaines pistes pour améliorer la précision de l'estimation des positions de l'ensemble des observations, ce procédé peut être mis à profit pour tirer parti du fait que certaines observations effectuées peuvent être relatives à des objets dont les positions sont connues avec précision. A cet effet le procédé selon l'invention peut comporter une phase troisième phase, complémentaire, similaire à la seconde phase décrite précédemment, mise en oeuvre lorsqu'une telle observation est signalée. Dans une telle circonstance, la position du noeud du maillage fictif, associé au contact correspondant à cette observation, peut être modifiée, de sorte qu'on observe l'apparition d'une tension entre ce noeud et le noeud associé à l'observation correspondante tension qui se résout comme dans le cas d'une fusion d'observations par une modification globale des positions de l'ensemble des noeuds du maillage. Cette modification se traduit dans le monde réel par une modification des positions estimées de l'ensemble des observations et des contacts.

Il est par ailleurs à noter que, parallèlement à son objet principal le procédé selon l'invention peut être utilisé pour permettre au véhicule de corriger l'erreur commise par les moyens de mesure du bord sur la détermination de la position réelle du véhicule à un instant donné, une erreur sur la position estimée du véhicule entrainant une erreur systématique sur l'estimation des positions des observations effectuées. A cet effet le procédé selon l'invention peut comporter une phase complémentaire, mise en oeuvre après la seconde ou la troisième phase, durant laquelle on réactualise l'estimation de la position du véhicule à partir des positions estimées modifiées des observations.

**Revendications**

**1.** Procédé d'estimation et de correction dynamique de la position absolue d'objets observés sur le fond marin par un système de détection sonar porté par un véhicule évoluant au-dessus du fond, un objet étant détecté par l'observation de son ombre acoustique, cette observation donnant lieu à la création d'un objet fictif, ou contact, dont la position estimée est initialement celle associée à l'observation qui lui a donné naissance et qui représente l'objet détecté, **caractérisé en ce qu'**il réalise les phases suivantes:

- une première phase (31) consistant à construire un maillage fictif à partir des observations effectuées au cours du temps, le maillage étant construit en représentant chaque observation effectuée par un noeud (41, 44) dont la position est celle de l'observation et en reliant les noeuds les uns aux autres par l'intermédiaire de liaisons élastiques fictives (46, 47); une nouvelle observation étant associée à un noeud (41) qui est relié à un point d'ancrage fictif (42), situé sur le fond marin, par une première liaison élastique fictive (43), et qui est intégré au maillage existant par l'intermédiaire d'un ensemble de liaisons élastiques fictives chacune de ces liaisons (46, 47) reliant le noeud (41) à des noeuds du maillage (44, 45) correspondant à des observations précédant l'observation considérée dans le temps; un noeud (41) associé à une nouvelle observation étant par ailleurs lié par une autre liaison élastique fictive au noeud associé au contact (48) correspondant à cette nouvelle observation, noeud (non représenté sur la figure car confondu initialement avec le noeud de la nouvelle observation) dont la position est celle du lieu d'observation; les liaisons élastiques ainsi établies ayant des longueurs initiales telle que compte-tenu des positions des différents noeuds elles n'exercent aucune tension sur les noeuds auxquels elles sont reliées.

- une seconde phase (32) consistant, lorsque deux observations sont considérées comme concernant un même objet, à fusionner ces observations en leur associant un contact unique, dont la position est fonction des deux observations fusionnées, la fusion se traduisant au niveau du maillage par le remplacement des noeuds associés aux contacts correspondant initialement aux observations par un noeud (56) associé au nouveau contact formé, ce noeud étant lié aux noeuds (51, 52) associés aux observations correspondantes par l'intermédiaire des liaisons fictives (53, 54) reliant initialement le noeud associé à une observation au noeud associé à son contact; l'introduction de ce noeud commun (56) dans le maillage induisant sur les noeuds (51, 52) associés aux observations fusionnées des tensions qui sont transmises aux autres noeuds du maillage par les diverses liaisons élastiques fictives et qui sont résolues par une modification des positions des noeuds constituant le maillage; la position modifiée de chaque noeud étant attribuée à l'observation ou au contact associé au noeud considéré; la première phase étant mise en oeuvre pendant toute la durée de l'opération d'analyse du fond marin, tandis que la seconde phase est mise en oeuvre chaque fois que la fusion de deux observations est décidée.

2. Procédé selon la revendication 1, **caractérisé en ce que**, lorsqu'une observation particulière est considérée comme correspondant à un objet dont la position réelle est connue, on réalise une variante de la seconde phase consistant à modifier la position du noeud associé au contact correspondant à cette observation de façon à ce qu'il occupe de manière définitive la position de cet objet; l'association d'une observation et d'un objet connu ayant les mêmes effets sur le maillage et par suite, sur les positions des autres observations et contacts, que la fusion de deux observations.

3. Procédé selon l'une des revendications 1 ou 2, **caractérisé en ce qu'**il comporte une phase complémentaire, réalisée après la seconde phase, consistant à recalculer la position estimée du véhicule à partir des estimations réactualisées des positions des observations.

4. Procédé selon l'une quelconque des revendications précédentes, **caractérisé en ce que**, la liaison élastique fictive (43) liant un noeud i correspondant à une nouvelle observation à son point d'encrage au sol (42) est une liaison dont la longueur initiale nulle, dont la raideur $k_A$ est définie par la relation:

$$K_A(i) = \frac{1}{\sigma_i^2}$$

$\sigma_i$ correspondant à l'incertitude de mesure de la position de l'observation i.

5. Procédé selon l'une quelconque des revendications précédentes, **caractérisé en ce que**, la liaison élastique fictive (46) liant un noeud i (41) correspondant à une nouvelle observation au noeuddu maillage correspondant à une observation j antérieure (44) est une liaison dont la longueur est déterminée par les position des noeuds au moment de l'établissement de la liaison de façon à ce que le noeud correspondant à la nouvelle observation se trouve positionnée à la verticale de son point d'ancrage (42) et que la liaison n'exerce aucune contrainte sur les noeuds considérés, et dont la raideur $k_L$ est définie par les relations:

$$K_L(i, j) = \frac{1}{\sigma_{ij}^2} \quad \text{et} \quad \sigma_{ij} = \sqrt{\sigma_i^2 + \sigma_j^2}$$

$\sigma_i$ et $\sigma_j$ correspondant respectivement aux incertitudes de mesures des positions des observations i et j.

6. Procédé selon l'une quelconque des revendications précédentes, **caractérisé en ce que**, la liaison élastique fictive (43) liant un noeud i (41) correspondant à une nouvelle observation au noeud (48) correspondant à son contact est une liaison dont la longueur initiale nulle, dont la raideur $k_c$ est définie par la relation:

$$K_C(i, k) = \frac{1}{\sigma_i^2}$$

$\sigma_i$ correspondant à l'incertitude de mesure de la position de l'observation i.

7. Procédé selon l'une des revendications précédentes, **caractérisé en ce que**, la propagation des contraintes imposées par des fusions d'observations se traduisant par une modification des positions des différents noeuds constituant le maillage, on définit un vecteur PI des positions initiales des différents noeuds, dont la taille varie au cours du temps à mesure que des observations nouvelles sont effectuées et dont les composantes forment une liste de N composantes, les $N_{obs}$ premières composantes étant relatives aux noeuds associés à des observations et les N-$N_{obs}$ dernières composantes étant relatives aux noeuds associés à des contacts, chaque composante correspondant à la position occupée par un noeud lors de son introduction dans le maillage, et un vecteur PC des positions corrigées des différents noeuds constituant le maillage à un instant donné dont la taille varie au cours du temps à mesure que des observations nouvelles sont effectuées et que des fusions ont lieu, le vecteur PC, étant défini à partir du vecteur PI par la relation suivante:

$$PC = PI + Q_{opt}$$

dans laquelle $Q_{opt}$ représente le vecteur des déplacements nodaux optimaux dont chacune des composantes correspond au terme de correction à appliquer à la composante correspondante du vecteur des positions initiales PI pour déterminer la composante correspondante du vecteur des positions corrigées; chaque composante du vecteur $Q_{opt}$ étant fonction de la configuration du maillage global à l'instant considéré et des caractéristiques des liaisons élastiques fictives reliant les noeuds entre eux.

8. Procédé selon la revendication 7, **caractérisé en ce que**, le vecteur des déplacements nodaux optimaux $Q_{opt}$ est défini par la relation suivante:

$$Q_{opt} = - [M + C]^{-1} \cdot C \cdot PI,$$

dans laquelle M et C représentent deux matrices carrées dont les dimensions sont égales au nombre de noeuds du maillage à l'instant considéré, ces matrices étant préalablement initialisée à zéro; l'établissement de la matrice M étant réalisé de proche en proche en deux phases:

- une première phase durant laquelle les valeurs des éléments (i, i) situés sur la diagonale de la matrice, un élément de la diagonale caractérisant la liaison de chaque noeud associé à une observation i à son ancrage, sont calculées à partir de la relation suivante:

$$M(i, i) = M(I, I) + k_A(i) \quad \text{avec} \quad K_A(i) = 1/\sigma_i^2$$

- une deuxième phase durant laquelle la valeur de chaque élément (i, j) de la matrice, caractérisant une liaison existant entre les noeuds d'une observation i et d'une observation j, est calculée à partir des relations suivantes:

$$M(i, i) = M(i, i) + k_L(i, j) \,,$$

$$M(j, j) = M(j, j) + k_L(i, j)$$

et

$$M(i, j) = M(i, j) - k_L(i, j)$$

$$M(j, i) = M(j, i) - k_L(i, j)$$

avec

$$K_L(i, j) = 1/\sigma_{ij}^2 \quad \text{et} \quad \sigma_{ij} = \sqrt{\sigma_i^2 + \sigma_j^2}$$

l'établissement de la matrice C étant réalisé de proche en proche en deux phases:

- une première phase durant laquelle la valeur de chaque élément (i, k) de la matrice, caractérisant une liaison existant entre le noeud associé à une observation i et celui associé à un contact k, est calculée à partir des relations suivantes:

$$C(i, i) = C(i, i) + k_C(i, k)$$

$$C(N_{obs}+k, N_{obs}+k) = C(N_{obs}+k, N_{obs}+k) + k_C(i, k)$$

$$C(i, N_{obs}+k) = C(i, N_{obs} +k) - k_C(i, k)$$

$$C(N_{obs}+k, i) = C(N_{obs} +k, i) - k_C(i, k)$$

avec

$$K_C(i, k) = 1/\sigma_i^2$$

Où $N_{obs}$ représente le nombre d'observations réalisées.

9. Procédé de cartographie en temps différé d'une zone de fond marin cette cartographie étant réalisée à partir des positions d'objets observés par un système de détection sonar lors d'une opération d'observation de la zone du fond marin considérée durant laquelle le sonar mesure la position des objets détectés, **caractérisé en ce qu'**il met en oeuvre le procédé selon l'une quelconque des revendications 1 à 3 sur les observations mémorisées, les positions des observations ainsi recalculées étant utilisées pour renseigner la carte de la zone considérée.

**Patentansprüche**

1. Verfahren zum Schätzen und dynamischen Korrigieren der absoluten Position von Objekten, die auf dem Meeresboden von einem Sonarerkennungssystem beobachtet werden, das von einem sich über den Meeresboden bewegenden Fahrzeug getragen wird, wobei ein Objekt durch Beobachten seines akustischen Schattens erkannt wird, wobei diese Beobachtung zur Erzeugung eines fiktiven Objekts oder Kontakts führt, dessen geschätzte Position anfänglich diejenige ist, die mit der Beobachtung assoziiert ist, die sie hervorbrachte und die das erkannte Objekt repräsentiert, **dadurch gekennzeichnet, dass** es die folgenden Phasen durchführt:

   - eine erste Phase (31), die das Konstruieren eines fiktiven Netzwerks auf der Basis der im Laufe der Zeit durchgeführten Beobachtungen beinhaltet, wobei das Netzwerk unter Darstellung jeder gemachten Beobachtung durch einen Knoten (41, 44) aufgebaut wird, dessen Position die der Beobachtung ist, und unter Verknüpfung der Knoten miteinander mittels fiktiver elastischer Verbindungen (46, 47); wobei eine neue Beobachtung mit einem Knoten (41) assoziiert ist, der mit einem auf dem Meeresboden befindlichen fiktiven Ankerpunkt (42) durch eine erste fiktive elastische Verbindung (43) verknüpft und in das existierende Netzwerk mittels eines Satzes von fiktiven elastischen Verbindungen integriert ist, wobei jede dieser Verbindungen (46, 47) den Knoten (41) mit Knoten des Netzwerks (44, 45) verknüpft, die Beobachtungen entsprechen, die vor der in der Zeit betrachteten Beobachtung liegen, wobei ein mit einer neuen Beobachtung assoziierter Knoten (41) ferner durch eine andere fiktive elastische Verbindung mit dem Knoten verknüpft ist, der mit dem Kontakt (48) assoziiert ist, der dieser neuen Beobachtung entspricht, wobei die Position des Knotens (in der Zeichnung nicht dargestellt, da sie anfänglich mit dem Knoten der neuen Beobachtung zusammenfällt) die des Beobachtungsortes ist; wobei die so aufgebauten elastischen Verbindungen solche Anfangslängen haben, dass sie unter Berücksichtigung der Positionen der verschiedenen Knoten keine Spannung auf die Knoten ausüben, mit denen sie verknüpft sind;
   - eine zweite Phase (32), in der, wenn zwei Beobachtungen als dasselbe Objekt betreffend angesehen werden, diese Beobachtungen fusioniert werden, indem sie mit einem einzigen Kontakt assoziiert werden, dessen Position von den beiden fusionierten Beobachtungen abhängig ist, wobei die Fusion auf dem Netzwerk durch Ersetzen der Knoten ausgedrückt wird, die mit den Kontakten assoziiert sind, die anfänglich den Beobachtungen durch einen Knoten (56) entsprechen, der mit dem neu gebildeten Kontakt assoziiert ist, wobei dieser Knoten mit den Knoten (51, 52), die mit den entsprechenden Beobachtungen assoziiert sind, mittels der fiktiven Verbindungen (53, 54) verknüpft ist, die anfänglich den mit einer Beobachtung assoziierten Knoten mit dem mit seinem Kontakt assoziierten Knoten verknüpfen; wobei die Einführung dieses gemeinsamen Knotens (56) in das Netzwerk auf den mit den fusionierten Beobachtungen assoziierten Knoten (51, 52) Spannungen verursacht, die an die anderen Knoten des Netzwerks durch die diversen fiktiven elastischen Verbindungen übertragen werden und die durch eine Modifikation der Positionen der das Netzwerk bildenden Knoten aufgelöst werden; wobei die modifizierte Position jedes Knotens der Beobachtung oder dem mit dem betrachteten Knoten assoziierten Kontakt zugeordnet wird;
   wobei die erste Phase für die gesamte Dauer der Meeresbodenanalyseoperation implementiert wird, während die zweite Phase jedes Mal implementiert wird, wenn eine Entscheidung zum Fusionieren von zwei Beobachtungen getroffen wird.

2. Verfahren nach Anspruch 1, **dadurch gekennzeichnet, dass**, wenn eine bestimmte Beobachtung als einem Objekt entsprechend angesehen wird, dessen echte Position bekannt ist, eine Variante der zweiten Phase durchgeführt wird, die das Modifizieren der Position des mit dem Kontakt assoziierten Knotens beinhaltet, der dieser Beobachtung entspricht, so dass er definitiv die Position des Objekts einnimmt; wobei die Assoziation einer Beobachtung und eines bekannten Objekts dieselben Effekte auf das Netzwerk und nachfolgend auf die Positionen der anderen Beobachtungen und Kontakte wie die Fusion von zwei Beobachtungen hat.

3. Verfahren nach Anspruch 1 oder 2, **dadurch gekennzeichnet, dass** es eine zusätzliche Phase, die nach der zweiten Phase durchgeführt wird, beinhaltet, die das Neuberechnen der geschätzten Position des Fahrzeugs auf der Basis der aktualisierten Schätzungen der Positionen der Beobachtungen beinhaltet.

4. Verfahren nach einem der vorherigen Ansprüche, **dadurch gekennzeichnet, dass** die fiktive elastische Verbindung (43), die einen einer neuen Beobachtung entsprechenden Knoten i mit seinem Ankerpunkt am Boden (42) verknüpft, eine Verbindung mit einer Anfangslänge null ist, deren Steifigkeit $k_A$ durch die folgende Beziehung definiert wird:

$$K_A(i) = \frac{1}{\sigma_i^2}$$

wobei $\sigma_i$ der Messunsicherheit der Position der Beobachtung i entspricht.

5. Verfahren nach einem der vorherigen Ansprüche, **dadurch gekennzeichnet, dass** die fiktive elastische Verbindung (46), die einen einer neuen Beobachtung entsprechenden Knoten i (41) mit dem einer vorherigen Beobachtung j (44) entsprechenden Knoten des Netzwerks verknüpft, eine Verbindung mit einer Länge ist, die durch die Positionen der Knoten zum Zeitpunkt der Herstellung der Verbindung ermittelt wird, so dass sich der der neuen Beobachtung entsprechende Knoten auf der Vertikalen seines Ankerpunkts (42) befindet und so dass die Verbindung keine Belastung auf die betrachteten Knoten ausübt, und deren Steifigkeit $k_L$ durch die folgenden Beziehungen definiert wird:

$$K_L(i, j) = \frac{1}{\sigma_{ij}^2} \qquad \text{und} \qquad \sigma_{ij} = \sqrt{\sigma_i^2 + \sigma_j^2}$$

wobei $\sigma_i$ und $\sigma_j$ jeweils den Messunsicherheiten der Positionen der Beobachtungen i und j entsprechen.

6. Verfahren nach einem der vorherigen Ansprüche, **dadurch gekennzeichnet, dass** die fiktive elastische Verbindung (43), die einen einer neuen Beobachtung entsprechenden Knoten i (41) mit dem seinem Kontakt entsprechenden Knoten (48) verknüpft, eine Verbindung mit einer Anfangslänge null ist, deren Steifigkeit $k_c$ durch die folgende Beziehung definiert wird:

$$K_C(i, k) = \frac{1}{\sigma_i^2}$$

wobei $\sigma_i$ der Messunsicherheit der Position der Beobachtung i entspricht.

7. Verfahren nach einem der vorherigen Ansprüche, **dadurch gekennzeichnet, dass**, da sich die Ausbreitung der durch Beobachtungsfusionen auferlegten Belastungen durch eine Modifikation der Positionen der verschiedenen das Netzwerk bildenden Knoten ausdrückt, ein Vektor PI der Anfangspositionen der verschiedenen Knoten definiert wird, dessen Größe im Laufe der Zeit in dem Maße variiert, in dem neue Beobachtungen erfolgen und deren Komponenten eine Liste von N Komponenten bilden, wobei sich die $N_{obs}$ ersten Komponenten auf die mit Beobachtungen assoziierten Knoten beziehen und die $N-N_{obs}$ letzten Komponenten sich auf die mit Kontakten assoziierten Knoten beziehen, wobei jede Komponente der von einem Knoten bei seiner Einführung in das Netzwerk eingenommenen Position entspricht, und ein Vektor PC der korrigierten Positionen der verschiedenen Knoten definiert wird, die das Netzwerk zu einem gegebenen Zeitpunkt bilden, wobei die Größe des Vektors im Laufe der Zeit in dem Maße variiert, in dem neue Beobachtungen erfolgen und Fusionen stattfinden, wobei der Vektor PC auf der Basis des Vektors PI durch die folgende Beziehung definiert wird:

$$PC = PI + Q_{opt}$$

wobei $Q_{opt}$ den Vektor der optimalen Knotenverschiebungen repräsentiert, wobei jede seiner Komponenten dem Korrekturterm entspricht, der auf die entsprechende Komponente des Vektors PI von Anfangspositionen anzuwenden ist, um die entsprechende Komponente des Vektors der korrigierten Positionen zu ermitteln; wobei jede Komponente des Vektors $Q_{opt}$ von der Konfiguration des globalen Netzwerks zum betrachteten Zeitpunkt und von den Charakteristiken der die Knoten miteinander verknüpfenden fiktiven elastischen Verbindungen abhängig ist.

8. Verfahren nach Anspruch 7, **dadurch gekennzeichnet, dass** der Vektor der optimalen nodalen Verschiebungen $Q_{opt}$ durch die folgende Beziehung definiert wird:

$$Q_{opt} = - [M + C]^{-1} \cdot C \cdot PI,$$

wobei M und C zwei Quadratmatrizen repräsentieren, deren Dimensionen gleich der Anzahl von Knoten des Netzwerks zu dem betrachteten Zeitpunkt sind, wobei diese Matrizen zuvor auf null gesetzt werden, wobei die Erstellung der Matrix M allmählich in zwei Phasen erfolgt:

- einer ersten Phase, während der die Werte der auf der Diagonalen der Matrix befindlichen Elemente (i, i), wobei ein Element der Diagonalen die Verbindung jedes mit einer Beobachtung i assoziierten Knotens mit seinem Ankerpunkt charakterisiert, auf der Basis der folgenden Beziehung berechnet werden:

$$M(i, i) = M(I, I) + k_A(i) \text{ mit } K_A(i) = 1/\sigma_i^2$$

- einer zweiten Phase, während der der Wert jedes Elements (i, j) der Matrix, das eine zwischen den Knoten einer Beobachtung i und einer Beobachtung j existierende Verbindung charakterisiert, auf der Basis der folgenden Beziehungen berechnet wird:

$$M(i, i) = M(i, i) + k_L(i, j)$$

$$M(j, j) = M(j, j) + k_L(i, j)$$

und

$$M(i, j) = M(i, j) + k_L(i, j)$$

$$M(j, i) = M(j, i) + k_L(i, j)$$

mit $K_L(i, j) = 1/\sigma_{ij}^2$ und $\sigma_{ij} = \sqrt{\sigma_i^2 + \sigma_j^2}$

wobei die Erstellung der Matrix C allmählich in zwei Phasen durchgeführt wird:

- einer ersten Phase, während der der Wert jedes Elements (i, k) der Matrix, das eine zwischen dem mit einer Beobachtung i assoziierten Knoten und dem mit einem Kontakt k assoziierten Knoten existierende Verbindung charakterisiert, auf der Basis der folgenden Beziehungen berechnet wird:

$$C(i, i) = C(i, i) + k_C(i, k)$$

$$C(N_{obs}+k, N_{obs}+k) = C(N_{obs}+k, N_{obs}+k) + k_C(i, k)$$

$$C(i, N_{obs}+k) = C(i, N_{obs}+k) - k_C(i, k)$$

$$C(N_{obs}+k, i) = C(N_{obs}+k, i) - k_C(i, k)$$

mit $K_c(i, k) = 1/\sigma_i^2$
wobei $N_{obs}$ die Anzahl von durchgeführten Beobachtungen repräsentiert.

9. Verfahren zum zeitversetzten Kartieren einer Zone des Meeresbodens, wobei dieses Kartieren auf der Basis der Positionen von Objekten erfolgt, die von einem Sonarerkennungssystem während eines Vorgangs des Beobachtens der betrachteten Zone des Meeresbodens beobachtet werden, während dem das Sonar die Position der erkannten Objekte misst, **dadurch gekennzeichnet, dass** es das Verfahren nach einem der Ansprüche 1 bis 3 an den gespeicherten Beobachtungen implementiert, wobei die so neu berechneten Positionen der Beobachtungen zum Ausfüllen der Karte der betrachteten Zone benutzt werden.

## Claims

1. A method for estimating and dynamically correcting the absolute position of objects observed on the seabed by a sonar detection system carried by a vehicle moving over the seabed, wherein an object is detected by observing its acoustic shadow, said observation resulting in the creation of a fictitious object or contact, the estimated position of which is initially the position associated with the observation that resulted in its appearance and which represents the detected object, **characterised in that** it carries out the following phases:

- a first phase (31) that comprises constructing a fictitious mesh on the basis of observations carried out over time, with said mesh being constructed by representing each completed observation by a node (41, 44), the position of which is that of the observation, and by connecting the nodes together by means of fictitious elastic links (46, 47), with a new observation being associated with a node (41) that is connected to a fictitious anchor point (42), located on the seabed, by a first fictitious elastic link (43), and which is included in the existing mesh by means of a set of fictitious elastic links, with each of said links (46, 47) connecting said node (41) to nodes (44, 45) of said mesh that correspond to observations preceding the observation considered in the time, wherein a node (41) associated with a new observation is also linked by a further fictitious elastic link to the node associated with the contact (48) that corresponds to this new observation, with the position of said node (not shown in the drawing as it initially coincides with the node of the new observation) being that of the location of the observation; with the initial lengths of the elastic links that have been established thus being such that, taking into account the positions of the various nodes, they do not exert any tension on the nodes to which they are connected;
- a second phase (32) that comprises, when two observations are considered to relate to the same object, merging these observations by associating them with a single contact, the position of which is a function of the two merged observations, with the merging being expressed on the mesh by the replacement of the nodes associated with the contacts that initially correspond to the observations by a node (56) associated with the new formed contact, said node being linked to the nodes (51, 52) associated with the corresponding observations by means of the fictitious links (53, 54) that initially connect the node associated with an observation to the node associated with its contact, with the introduction of this common node (56) into the mesh causing, on said nodes (51, 52) associated with the merged observations, tensions that are transmitted to the other nodes of the mesh by the various fictitious elastic links and which are resolved by a modification of the positions of the nodes that constitute the mesh; the modified position of each node being attributed to the observation or to the contact associated with the considered node;
with the first phase being implemented for the entire duration of the seabed analysis operation, whereas the second phase is implemented each time a decision is made to merge two observations.

2. The method according to claim 1, **characterised in that**, when a particular observation is considered to be corresponding to an object for which the real position is known, a variant of the second phase is carried out that comprises modifying the position of the node associated with the contact that corresponds to this observation so that it definitively occupies the position of said object; with the association of an observation and a known object having the same effects on the mesh and, subsequently, on the positions of the other observations and contacts as the merging of two observations.

3. The method according to claim 1 or 2, **characterised in that** it comprises an additional phase, carried out after the second phase, that comprises recalculating the estimated position of the vehicle on the basis of the updated estimates of the positions of the observations.

4. The method according to any one of the preceding claims, **characterised in that** the fictitious elastic link (43) linking a node i that corresponds to a new observation to its floor anchor point (42) is a link with an initial zero length, the stiffness $k_A$ of which is defined by the following relation:

$$K_A(i) = \frac{1}{\sigma_i^2}$$

with $\sigma_i$ corresponding to the measurement uncertainty of the position of the observation i.

5. The method according to any one of the preceding claims, **characterised in that** the fictitious elastic link (46) linking a node i (41) that corresponds to a new observation to the node of the mesh that corresponds to a previous observation j (44) is a link having a length that is determined by the positions of the nodes when the link was established so that the node that corresponds to the new observation is positioned on the vertical of its anchor point (42) and so that the link does not exert any stress on the considered nodes, and for which the stiffness $k_L$ is defined by the following relations:

$$K_L(i, j) = \frac{1}{\sigma_{ij}^2} \qquad \text{and} \qquad \sigma_{ij} = \sqrt{\sigma_i^2 + \sigma_j^2}$$

with $\sigma_i$ and $\sigma_j$ respectively corresponding to the measurement uncertainties of the positions of observations i and j.

6. The method according to any one of the preceding claims, **characterised in that** the fictitious elastic link (43) linking a node i (41) that corresponds to a new observation to the node (48) that corresponds to its contact is a link with an initial zero length, the stiffness $k_c$ of which is defined by the following relation:

$$K_C(i, k) = \frac{1}{\sigma_i^2}$$

with $\sigma_i$ corresponding to the measurement uncertainty of the position of the observation i.

7. The method according to any one of the preceding claims, **characterised in that**, with the propagation of the stresses imposed by the merging of observations being expressed by a modification of the positions of the various nodes that constitute the mesh, a vector PI is defined of the initial positions of the various nodes, the size of said vector varies over time as new observations are carried out and the components of which form a list of N components, the $N_{obs}$ first components relating to the nodes associated with observations and the $N-N_{obs}$ last components relating to the nodes associated with contacts, each component corresponding to the position occupied by a node when it is introduced into the mesh, and a vector PC is defined of the corrected positions of the various nodes that constitute the mesh at a given instant, the size of said vector varies over time as new observations are carried out and the mergers occur, with the vector PC being defined on the basis of the vector PI by the following relation:

$$PC = PI + Q_{opt}$$

wherein $Q_{opt}$ represents the vector of the optimum nodal displacements, each of the components of which corresponding to the correction term to be applied to the corresponding component of the initial positions vector PI for determining the corresponding component of the corrected positions vector; with each component of the vector $Q_{opt}$ being a function of the configuration of the global mesh at the considered instant and of the characteristics of the fictitious elastic links connecting the nodes together.

8. The method according to claim 7, **characterised in that** the vector of the optimum nodal displacements $Q_{opt}$ is defined by the following relation:

$$Q_{opt} = - [M + C]^{-1 \cdot} C^{\cdot} PI,$$

wherein M and C represent two square matrices, the dimensions of which are equal to the number of nodes of the mesh at the considered instant, said matrices being previously set to zero;
with the establishment of the matrix M being carried out gradually in two phases:

- a first phase, during which the values of the elements (i, i) located on the diagonal of the matrix, with an element of the diagonal characterising the linking of each node associated with an observation i to its anchor point, are calculated on the basis of the following relation:

$$M(i, i) = M(I, I) + k_A(i) \text{ with } K_A(i) = 1/\sigma_i^{2}$$

- a second phase, during which the value of each element (i, j) of the matrix, which characterises an existing link between the nodes of an observation i and an observation j, is calculated on the basis of the following relations:

$$M(i, i) = M(i, i) + k_L(i, j)$$

$$M(j, j) = M(j, j) + k_L(i, j)$$

and

$$M(i, j) = M(i, j) + k_L(i, j)$$

$$M(j, i) = M(j, i) + k_L(i, j)$$

with $K_L(i, j) = 1/\sigma_{ij}^2$ and $\sigma_{ij} = \sqrt{\sigma_i^{2} + \sigma_j^{2}}$

with the establishment of the matrix C being carried out gradually in two phases:

- a first phase, during which the value of each element (i, k) of the matrix, which characterises an existing link between the node associated with an observation i and that associated with a contact k, is calculated on the basis of the following relations:

$$C(i, i) = C(i, i) + k_C(i, k)$$

$$C(N_{obs}+k, N_{obs}+k) = C(N_{obs}+k, N_{obs}+k) + k_C(i, k)$$

$$C(i, N_{obs}+k) = C(i, N_{obs}+k) - k_C(i, k)$$

$$C(N_{obs}+k, i) = C(N_{obs}+k, i) - k_C(i, k)$$

with $K_c(i, k) = 1/\sigma_i^2$
where $N_{obs}$ represents the number of observations carried out.

9. A method for the non-real time mapping of a zone of the seabed, said mapping being carried out on the basis of the positions of objects observed by a sonar detection system during an operation of observing the considered zone of the seabed, during which the sonar measures the position of the detected objects, **characterised in that** it implements the method according to any one of claims 1 to 3 on the stored observations, with the positions of the observations thus recalculated being used to complete the map of the considered zone.

Fig. 1

Fig. 2

EP 2 491 424 B1

Fig. 3

Fig. 4

Fig. 6

Vue selon A-A

Fig. 5

**RÉFÉRENCES CITÉES DANS LA DESCRIPTION**

**Documents brevets cités dans la description**

- WO 9102989 A